# FASCICULE DE BREVET EUROPEEN

(11) **EP 0 418 123 B1**
(45) Date de publication et mention de la délivrance du brevet: **28.06.1995**
(21) Numéro de dépôt: 90402446.0
(22) Date de dépôt: 06.09.1990
(51) Int. Cl.: B32B 17/10, C03C 27/12, B60R 25/10, B60J 1/00, G08B 13/04

(54) **Vitrage automobile latéral coulissant**
Schiebbare laterale Autoscheiben
Sliding lateral auto panes

(30) Priorité: 13.09.1989 DE 8910916 U
(43) Date de publication de la demande: 20.03.1991
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Kramling, Franz, Dr., D-5100 Aachen (DE); Ohlenforst, Hans, D-5100 Aachen (DE)
(74) Mandataire: Muller, René

(56) Documents cités:
- EP-A- 0 020 159
- EP-A- 0 026 123
- DE-A- 1 430 135
- DE-B- 1 278 292
- FR-A- 2 079 334
- FR-A- 2 412 432
- US-A- 2 725 319
- US-A- 3 427 770

## Description

L'invention concerne un vitrage automobile en particulier un vitrage latéral coulissant verticalement.

En général, les vitrages latéraux des automobiles sont réalisés sous forme de verre de sécurité monolithique trempé thermiquement.

Les vitrages latéraux en verre trempé sont, de différents points de vue, des points faibles d'une automobile. C'est ainsi, par exemple, que les effractions dans les voitures se font, en général, en brisant un latéral trempé. Lorsqu'un verre trempé se brise c'est en mille morceaux qu'il explose en libérant totalement l'ouverture de la fenêtre. Ce comportement du verre trempé et l'ouverture intempestive de la baie peuvent également jouer un rôle au cours d'un accident. Les passagers peuvent en effet être expulsés par l'ouverture ainsi créée. De plus, les propriétés d'isolation acoustique des vitrages jouent un rôle de plus en plus important non seulement du point de vue du confort mais même de celui de la sécurité. Or, les vitrages monolithiques ne fournissent qu'un affaiblissement acoustique faible.

L'invention se donne pour tâche de fournir un vitrage latéral coulissant verticalement dans une portière de voiture qui présente une grande sécurité selon tous les points de vue. En particulier, le vitrage améliore sensiblement la sécurité contre l'effraction et l'affaiblissement acoustique. L'innovation réside dans le fait que la glace latérale coulissante est constituée d'un vitrage feuilleté dont l'un des constituants est en verre trempé, tandis que l'autre est d'une part de dimensions plus faibles, et d'autre part constitué d'un verre peu trempé. La périphérie du verre trempé sert au guidage du vitrage feuilleté dans les guides latéraux de l'encadrement de la fenêtre, tandis que les deux feuilles de verre unitaires sont reliées grâce à une couche intercalaire en matière thermoplastique possédant des propriétés d'affaiblissement acoustique élevées et une épaisseur comprise entre environ 0,8 et 2,0 mm.

La constitution du vitrage feuilleté qui possède une épaisseur plus faible à sa périphérie permet de l'installer sans modification importante, ni du cadre de la fenêtre, ni du système de manoeuvre du vitrage latéral. Selon la conception de la carrosserie du véhicule, la feuille de verre peu trempé de dimensions réduites peut être installée soit du côté extérieur, soit du côté intérieur du vitrage. Le choix dépendra de la variante qui fournit les meilleures conditions aérodynamiques pour l'écoulement de l'air. Le vitrage feuilleté agit grâce à sa constitution comme un retardateur d'effraction efficace. En effet, lorsque le verre trempé casse, d'une part, grâce à la couche intercalaire thermoplastique et, d'autre part, grâce au deuxième verre peu trempé installé du côté extérieur du vitrage, le vitrage reste en place dans la baie. par ailleurs, la couche intercalaire thermoplastique améliore sensiblement l'effet d'affaiblissement sonore du vitrage et donc le confort du véhicule ce qui, c'est bien connu, augmente la capacité de concentration du conducteur et diminue sa fatigue et agit donc favorablement sur la sécurité en général.

Pour améliorer encore davantage la sécurité contre l'effraction, on peut, dans une variante de l'invention, équiper la feuille de verre trempé sur sa surface, à un emplacement qui reste hors d'atteinte, d'une bande conductrice constituée d'un émail conducteur de l'électricité qui pourra être intégrée dans un circuit électrique commandant un dispositif d'alarme. Dans le cas où, à la suite d'une tentative d'effraction, le verre trempé casse, la bande conductrice constituée d'un émail fragile en lui-même est interrompue et le circuit électronique déclenche une alarme acoustique et/ou optique.

Des variantes intéressantes et des avantages du vitrage de l'invention apparaîtront à la lecture des revendications dépendantes et de la description et des figures qui suivent.

Les figures montrent successivement :
figure 1 : une vue globale en perspective d'un vitrage de portière coulissant conforme à l'invention pour une voiture particulière,
figure 2 : une coupe le long de la ligne II/II de la figure 1,
figure 3 : la même coupe d'une variante équipée d'une couche réfléchissante anti-solaire,
figure 4 : une coupe d'une variante équipée d'une couche de protection contre les éclats.

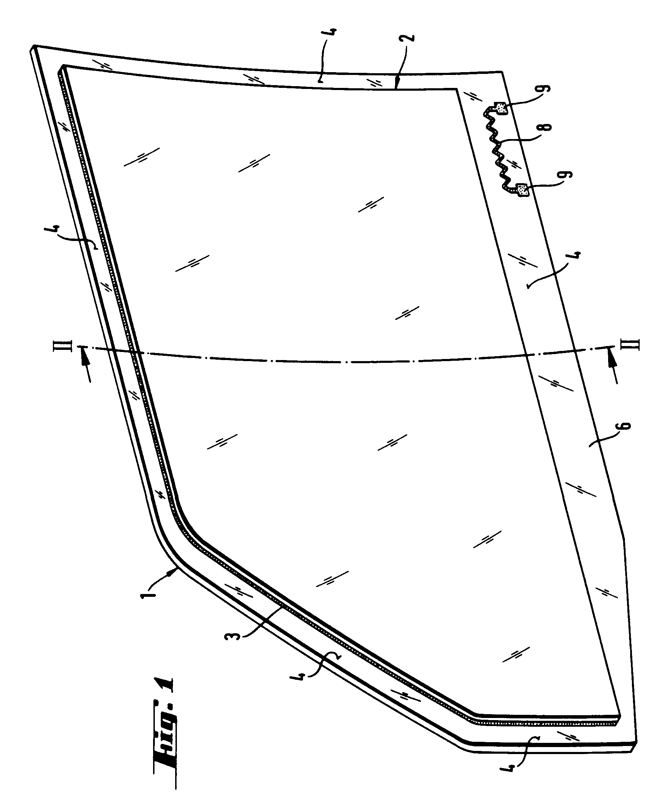

Sur la figure 1, on voit un vitrage latéral coulissant verticalement correspondant à l'invention. Il est bombé cylindriquement pour suivre le profil de la carrosserie. Le vitrage présenté est constitué d'un premier vitrage extérieur trempé thermiquement 1 de 3 mm d'épaisseur et d'un deuxième vitrage 2 dirigé vers l'intérieur du véhicule, celui-ci est constitué de verre flotté d'une épaisseur de 2 mm. On voit également une couche intercalaire thermoplastique 3 qui relie les deux verres 1 et 2. La couche intercalaire 3 a une épaisseur comprise entre 0,8 et 2,0 mm et de préférence entre 1,0 et 1,5 mm. L'épaisseur préférée est d'environ 1,2 mm.

Le verre extérieur 1 fait d'un verre trempé est plus grand que le verre peu trempé 2 qui est pratiquement exempt de contrainte, le verre 1 déborde du verre 2 de tous côtés. On obtient ainsi une sorte de marche à la périphérie du vitrage. La zone périphérique 4 en forme de cadre repose dans les guides de la baie où elle peut coulisser. Le dispositif prévu pour faire coulisser de bas en haut le vitrage portière n'est pas représenté. Il se fixe à la partie inférieure 6 du verre trempé 1. Cette zone reste cachée dans la portière même lorsque le vitrage est complètement relevé. La conception du vitrage feuilleté de l'invention le rend compatible avec les portières existantes dont les éléments de guidage et de montage sont prévus pour des vitrages monolitiques.

Les deux vitrages, d'une part le verre trempé 1, et d'autre part le verre peu trempé 2 sont bombés de la même manière. La liaison entre eux s'effectue grâce à l'intercalaire thermoplastique 3 de la manière habituelle. On utilise la chaleur et la pression par exemple dans un autoclave.

Les matériaux constituant la couche intercalaire 3 qui conviennent sont ceux qui engendrent un indice d'affaiblissement acoustique amélioré. On a sélectionné particulièrement les feuilles constituées d'une résine thermoplastique obtenue par la copolymérisation de chlorure de vinyle et de méthacrylate de glycidyl avec un plastifiant en proportion de 10 à 40 %. Des feuilles de ce type sont décrites dans le brevet EP 0 020 159. Elles montrent des qualités de résistance à la pénétration et de tenue en place des fragments qui les destinent particulièrement à constituer des intercalaires de vitrages feuilletés. L'affaiblissement acoustique qu'elles entraînent pour le vitrage est sensiblement plus élevé que celui du butyral de polyvinyle utilisé habituellement dans la fabrication des vitrages feuilletés.

Il est évident qu'on pourrait également, sans sortir du cadre de l'invention, utiliser comme intercalaire 3, d'autres matériaux dans la mesure où ils remplissent les conditions ci-dessus. C'est ainsi par exemple que les polyuréthanes thermoplastiques conviennent lorsque dans leur composition, le composé polyol est en excès par rapport à l'isocyanate, ce qui conduit à un polymère où les groupes hydroxyles sont en excès par rapport à une composition stoechiométrique telle qu'elle est décrite dans le brevet EP 0 026 123.

En bas dans la région périphérique du verre trempé 1 on a placé une bande conductrice 8 réalisée en un émail cuit à chaud qui est conducteur de l'électricité. Aux deux extrémités de la bande 8 sont prévues des surfaces 9 pour la soudure. C'est là qu'on pourra souder les connexions reliant le système à un circuit électronique d'alarme. Si le verre trempé 1 est brisé en un endroit quelconque il se casse intégralement et la bande conductrice 2 est immédiatement interrompue, ce qui provoque la réaction du circuit d'alarme qui déclenche l'alerte.

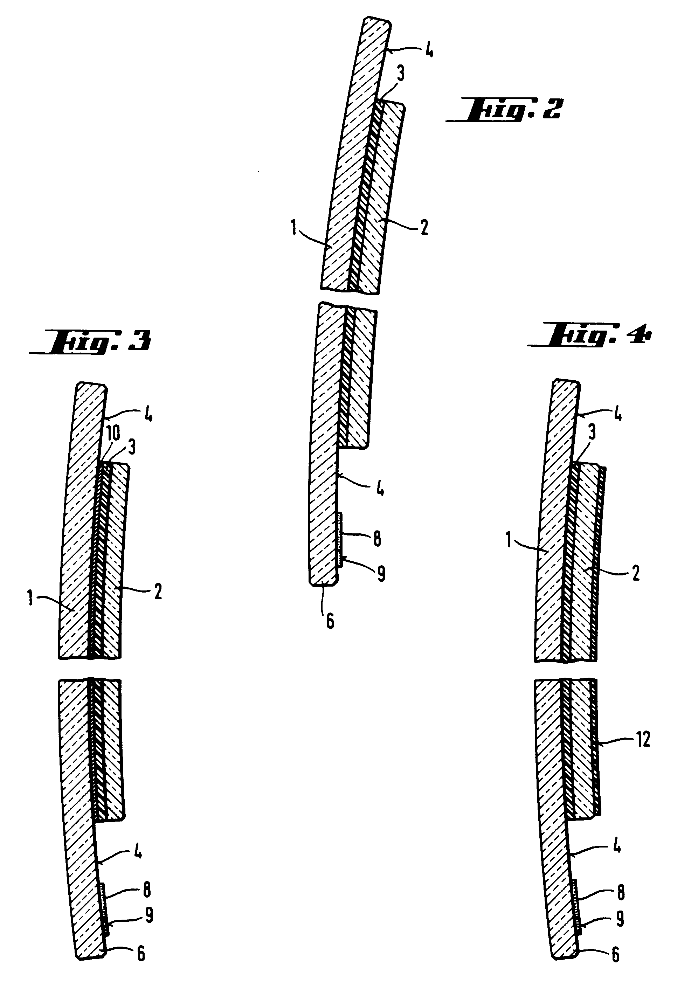

La disposition de la figure 1 qui était présentée en vue d'ensemble est reprise figure 2, en coupe cette fois.

La figure 3 montre également, sous forme d'une coupe, un vitrage latéral bombé selon l'invention avec la même constitution de base que sur les figures 1 et 2 ce qui permet d'utiliser les mêmes références. La différence consiste en une couche 10 qui réfléchit l'énergie solaire et qui est ajoutée au vitrage feuilleté. Cette couche est placée sur la face interne du verre extérieur 1. Elle est donc en contact avec la feuille intercalaire. La composition de la couche 10 est par exemple celle d'une multicouche à base d'argent transparent en tant que couche réfléchissante. Celle-ci est déposée sous vide sur le verre 1 par l'intermédiaire d'une couche d'accrochage à base d'oxyde métallique. La couche d'argent est protégée elle-même par une couche d'oxyde métallique. De telles multicouches sont connues. Elles sont déposées sur le vitrage bombé, entre autres par les techniques de pulvérisation cathodique assistée par un champ magnétique. La liaison entre le verre 1 équipé de sa couche 10 et le verre 2 se fait de la manière habituelle grâce à la feuille intercalaire thermoplastique 3.

Dans le cas où la couche réfléchissante 10 possède une résistance électrique suffisamment faible, de l'ordre de 2 à 6 ohms par carré, on peut ajouter à la fonction de réflexion énergétique une fonction chauffage. Dans ce cas, si c'est nécessaire, il sera possible de libérer automatiquement le vitrage de la glace ou de la condensation qui s'y seraient déposées ou simplement de prévenir ce dépôt. Dans ce cas, le verre 1 aura dû être équipé de bandes d'amenée de courant. Celles-ci, en contact avec la couche conductrice, permettent son alimentation en courant électrique.

Le mode de réalisation présenté figure 4 respecte le même principe de base que celui des figures 1 et 2. Ici, figure 4, le verre intérieur 2 est équipé sur sa surface qui est dirigée vers l'intérieur de l'habitacle d'une couche anti-éclats 12. Il s'agit par exemple d'un polyuréthane spécial anti-rayure. Le polyuréthane à la base de la couche anti-éclats 12 a une composition connue. Celle-ci peut cependant être modifiée pour ajouter aux propriétés du polyuréthane des caractéristiques qui retardent la condensation comme en l'explique dans la demande de brevet EP 0 269 469.

Pour augmenter encore davantage le confort dans l'habitacle de la voiture, on peut équiper la surface du vitrage feuilleté dirigée vers l'intérieur du véhicule en plus de la couche anti-éclats d'une couche de métal ou d'oxyde métallique avec une émissivité faible. De telles couches ont la propriété de réfléchir les rayons thermiques de grande longueur d'onde. De telles couches à basse émissivité sont connues en elles-mêmes.

Tandis que toutes les configurations décrites jusqu'à présent utilisaient un verre trempé de plus grande dimension situé à l'extérieur du verre peu trempé, on ne sortirait pas du domaine de l'invention si c'était le verre peu trempé de dimension plus faible qui était à l'extérieur, c'est-à-dire du côté convexe du vitrage feuilleté. Cette configuration pourrait s'avérer intéressante pour des raisons de conception et de montage du vitrage dans la portière.

## Revendications

1. Vitrage automobile latéral coulissant, caractérisé en ce que c'est un vitrage feuilleté dont l'un des éléments est un vitrage monolithique (1) en verre trempé, et que l'autre élément est un vitrage monolithique en verre peu trempé (2), que ce dernier a des dimensions plus petites que le vitrage trempé (1), que la zone périphérique (4) débordante du vitrage trempé (1) est utilisée pour le guidage du vitrage latéral dans le cadre de la fenêtre, et que la couche intercalaire (3) qui relie les vitrages monolithiques (1, 2) est constituée d'une feuille thermoplastique avec une épaisseur comprise entre environ 0,8 et 2,O mm.

2. Vitrage selon la revendication 1, caractérisé en ce que le vitrage trempé (1) constitue, lorsqu'il est monté, la face extérieure du vitrage feuilleté.

3. Vitrage selon la revendication 1, caractérisé en ce que le vitrage trempé de plus grande dimension que le vitrage peu trempé est placé lorsqu'il est monté sur la face intérieure du vitrage feuilleté.

4. Vitrage selon l'une des revendications 1 à 3, caractérisé en ce que la feuille intercalaire thermoplastique (3) est à base d'un copolymère de chlorure de vinyle et de méthacrylate de glycidyle et a une teneur en plastifiant de 10 à 40 %.

5. Vitrage selon l'une des revendications 1 à 3, caractérisé en ce que l'intercalaire thermoplastique 3 est à base de polyuréthane thermoplastique avec un excès du composant polyol par rapport à l'isocyanate.

6. Vitrage selon l'une des revendications 1 à 5, caractérisé en ce que le vitrage trempé (1) est équipé d'une bande conductrice (8) faite d'un émail fragile qui sert de détecteur de casse pour un circuit d'alarme.

7. Vitrage selon l'une des revendications 1 à 6, caractérisé en ce que la surface du vitrage extérieur (1) ou (2) en contact avec la feuille intercalaire(3) est revêtue d'une couche réfléchissante (10).

8. Vitrage selon la revendication 7, caractérisé en ce que la couche réfléchissante (10) a une résistance superficielle comprise entre 2 et 6 ohms par carré, qu'on peut la relier au circuit électrique du véhicule grâce à des amenées de courant et qu'elle sert de résistance chauffante.

9. Vitrage selon l'une des revendications 1 à 8, caractérisé en ce que la surface du vitrage feuilleté dirigée vers l'intérieur de la voiture est équipée d'une couche anti-éclats (12) en matière plastique.

10. Vitrage selon la revendication 9, caractérisé en ce que la couche anti-éclats (12) a des propriétés anti-condensation.

11. Vitrage selon l'une des revendications 1 à 10, caractérisé en ce que la surface du vitrage feuilleté dirigée vers l'intérieur de la voiture est équipée d'une couche transparente à basse émissivité.

## Claims

1. Sliding lateral automobile pane, characterized in that it is a laminated pane, one of the elements of which is a monolithic pane (1) of toughened glass, and that the other element is a monolithic pane of lightly toughened glass (2), that the latter has smaller dimensions than the toughened pane (1), that the projecting peripheral zone (4) of the toughened pane (1) is used for guiding the lateral pane in the frame of the windows and that the intermediate film (3) which bonds the monolithic panes (1, 2) together is constituted of a thermoplastics sheet having a thickness of between about 0.8 and 2.0 mm.

2. Pane according to Claim 1, characterized in that the toughened pane (1) constitutes, when mounted in position, the outer face of the laminated pane.

3. Pane according to Claim 1, characterized in that the toughened pane of larger dimensions than the lightly toughened pane is situated, when mounted in position, on the inner face of the laminated pane.

4. Pane according to one of Claims 1 to 3, characterized in that the thermoplastics intermediate sheet (3) is based upon a copolymer of vinyl chloride and glycidyl methacrylate and has a plasticizer content of 10 to 40%.

5. Pane according to one of Claims 1 to 3, characterized in that the thermoplastics intermediate sheet (3) is based upon a thermoplastics polyurethane with an excess of the polyol component by comparison with the isocyanate.

6. Pane according to one of Claims 1 to 5, characterized in that the toughened pane (1) is provided with a conducting strip (8) made of a brittle enamel, which serves as breakage detector for an alarm circuit.

7. Pane according to one of Claims 1 to 6, characterized in that the surface of the outer pane (1) or (2) in contact with the intermediate sheet (3) is coated with a reflecting film (10).

8. Pane according to Claim 7, characterized in that the reflective film (10) has a surface resistance lying between 2 and 6 ohms per square, that it can be connected to the electric circuit of the vehicle by electrical leads and that it serves as heating resistor.

9. Pane according to one of Claims 1 to 8, characterized in that the surface of the laminated pane towards the interior of the vehicle is equipped with an antisplinter film (12) of plastics material.

10. Pane according to Claim 9, characterized in that the antisplinter film (12) has anticondensation properties.

11. Pane according to one of Claims 1 to 10, characterized in that the surface of the laminated pane towards the interior of the vehicle is provided with a transparent film of low emissivity.

## Patentansprüche

1. Verschiebbare Auto-Seitenscheibe, **dadurch gekennzeichnet,** daß sie aus einer Verbundglasscheibe besteht, von der ein Element eine monolithische Glasscheibe (1) aus vorgespanntem Glas und das andere Element eine monolithische Glasscheibe (2) aus wenig vorgespanntem Glas ist, daß die letztere kleinere Dimensionen aufweist als die vorgespannte Glasscheibe (1), daß die überstehende Randzone (4) der vorgespannten Glasscheibe für die Führung der Seitenscheibe im Rahmen des Fensters dient, und daß die die monolithischen Glasscheiben (1,2) miteinander verbindende Zwischenschicht (3) aus einer thermoplastischen Folie mit einer Dicke zwischen etwa 0,8 und 2,0 mm besteht.

2. Glasscheibe nach Anspruch 1, dadurch gekennzeichnet, daß die vorgespannte Glasscheibe (1) im eingebauten Zustand die Außenseite der Verbundglasscheibe bildet.

3. Glasscheibe nach Anspruch 1, dadurch gekennzeichnet, daß die vorgespannte Glasscheibe mit größerer Abmessung als die wenig vorgespannte Glasscheibe im eingebauten Zustand auf der Innenseite der Verbundglasscheibe angeordnet ist.

4. Glasscheibe nach einem der Ansprüche 1 bis 3, dadurch gekennzeichnet, daß die thermoplastische Zwischenschicht (3) aus einem Copolymer von Vinylchlorid und Glycidylmethacrylat besteht und einen Weichmacheranteil von 10 bis 40 % enthält.

5. Glasscheibe nach einem der Ansprüche 1 bis 3, dadurch gekennzeichnet, daß die thermoplastische Zwischenschicht (3) aus einem thermoplastischen Polyurethan mit einem Überschuß der Polyolkomponente im Verhältnis zum Isocyanat besteht.

6. Glasscheibe nach einem der Ansprüche 1 bis 5, dadurch gekennzeichnet, daß die vorgespannte Glasscheibe (1) mit einem Leitstreifen (8) aus einem spröden Email versehen ist, der als Bruchdetektor für eine Alarmschaltung dient.

7. Glasscheibe nach einem der Ansprüche 1 bis 6, dadurch gekennzeichnet, daß die in Kontakt mit der Zwischenschicht (3) stehende Oberfläche der äußeren Glasscheibe (1) oder (2) mit einer reflektierenden Schicht (10) versehen ist.

8. Glasscheibe nach Anspruch 7, dadurch gekennzeichnet, daß die reflektierende Schicht (10) einen Oberflächenwiderstand von 2 bis 6 Ohm pro Quadrat aufweist, und daß sie über Stromzuführungen an das elektrische Netz des Fahrzeugs anschließbar ist und als Heizwiderstand dient.

9. Glasscheibe nach einem der Ansprüche 1 bis 8, dadurch gekennzeichnet, daß die zum Innenraum des Fahrzeugs gerichtete Oberfläche der Verbundglasscheibe mit einer Splitterschutzschicht (12) aus einem Kunststoffmaterial versehen ist.

10. Glasscheibe nach Anspruch 9, dadurch gekennzeichnet, daß die Splitterschutzschicht (12) beschlaghemmende Eigenschaften aufweist.

11. Glasscheibe nach einem der Ansprüche 1 bis 10, dadurch gekennzeichnet, daß die zum Innenraum des Fahrzeugs gerichtete Oberfläche der Verbundglasscheibe mit einer transparenten Schicht mit niedriger Emissivität versehen ist.
